# EUROPÄISCHE PATENTSCHRIFT

(11) **EP 1 606 150 B1**
(45) Veröffentlichungstag und Bekanntmachung des Hinweises auf die Patenterteilung: **27.01.2010**
(21) Anmeldenummer: 03788808.8
(22) Anmeldetag: 21.11.2003
(51) Int. Cl.: B60S 1/32, B60S 1/34, B60S 1/40

(54) **GELENKARM MIT EINER WISCHSTANGE**
ARTICULATED ARM WITH A WIPER ROD
BRAS ARTICULE MUNI D'UNE TIGE DE BALAYAGE

(30) Priorität: 18.03.2003 DE 10311783
(43) Veröffentlichungstag der Anmeldung: 21.12.2005
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2003/003870
(87) Internationale Veröffentlichungsnummer: WO 2004/083011

(56) Entgegenhaltungen:
- EP-A- 0 566 471
- EP-A- 1 004 488
- GB-A- 525 074
- US-A- 3 133 304
- US-A- 3 178 751
- US-A- 3 716 888
- US-A- 4 477 940
- US-A- 5 618 128
- US-A- 5 881 428

## Beschreibung

### Stand der Technik

Die Erfindung geht von einem Gelenkarm mit einer Wischstange nach dem Oberbegriff des Anspruchs 1 bzw. des Anspruchs 3 aus.

Aus der DE 198 54 309 A1 ist ein Wischarm bekannt, dessen auf einer Antriebsachse montierbares Befestigungsteil über ein Abklappgelenk mit einem Gelenkarm gelenkig verbunden ist. Dieser besitzt zum Abklappgelenk hin ein Gelenkteil, dessen freies Ende eine Wischstange umfasst und mit dieser verkrimpt ist. Die Wischstange weist ein durchgehendes Rohrprofil auf, das an dem dem Wischblatt zugewandten Ende durch einen Kunststoffkopf verschlossen ist, in dem Spritzdüsen vorgesehen sind. Vorzugsweise wird als Wischstange ein kostengünstiges Standardrohr mit einem runden Querschnitt verwendet, möglich sind jedoch auch andere Rohrformen, z.B. mit einem rechteckigen Querschnitt.

An dem dem Wischblatt zugewandten Ende der Wischstange ist ein Anschlussteil mit zwei miteinander festverbundenen U-Profilen vorgesehen. Das erste in Richtung der Wischstange offene U-Profil ist mit der Wischstange verkrimpt, während in das zweite in Richtung des Wischblatts hin offene U-Profil das Wischblatt eingehängt wird.

Wie aus der gleichen Schrift hervorgeht, sind ähnliche rohrförmige Wischstangen bei Nutzfahrzeugen und Bussen bekannt. Dabei ist die Wischstange an ihren Enden flach gedrückt und durch Nieten mit dem Gelenkteil bzw. dem Anschlussteil fest verbunden. Eine Halterung für die Zugfeder am Gelenkteil wird von einem Rohr gebildet, das teilweise von dem zugeordneten Ende der Wischstange umfasst und gemeinsam mit der Wischstange flachgedrückt wird. Es wird mit der Wischstange vernietet und erhält eine Bohrung, in die ein Ende der Zugfeder eingehängt wird. Der Wischarm eignet sich für übliche Wischblätter, die ein Tragbügelsystem besitzen und im Wesentlichen zwischen der Wischstange und einer Fahrzeugscheibe verlaufen.

Aus der DE 199 24 662 A1 ist ein Scheibenwischer mit einem gelenkfreien Wischblatt bekannt, das über ein so genanntes "Sidelock-System" mit einem Wischarm gelenkig verbunden ist. Hierzu dient ein zweiteiliges Verbindungsstück, dessen erstes Teil einen blockförmigen Abschnitt mit einer Lagerbohrung aufweist und das mit angeformten Formschlusselementen die als Tragelement dienenden Federleisten seitlich und von unten umfasst. Das zweite Teil ist an dem freien Ende des Wischarms vorgesehen, der ein zur Fahrzeugscheibe hin offenes, u-förmiges Profil aufweist. Ein Stift ist seitlich und quer zur Längsrichtung des Wischarms und zu dem Wischblatt zeigend in das zweite Teil eingesetzt, vorzugsweise verschweißt oder vernietet und in der Lagerbohrung des ersten Teils des Verbindungsstücks schwenkbar gelagert. Beim Herstellen des Wischarms in einem Stanz-Biegewerkzeug kann der Stift nicht mit ausgeformt werden, sondern muss in einem zusätzlichen Arbeitsgang gefügt und befestigt werden. Bei einer anderen Ausführungsform ist der Wischarm mit einem separaten, gieß- oder spritztechnisch gefertigten Anschlussstück versehen, der sowohl den Stift als auch Sicherungselemente für das Wischblatt in einem Stück umfasst. Das Anschlussstück ist außen auf das Ende einer Wischstange des Wischarms geschoben und dort befestigt, die ein Vollprofil aufweist und einen rechteckigen Querschnitt hat.

Parallel zum Stift ist am zweiten Teil des Verbindungsstücks in Längsrichtung versetzt eine Brücke angeordnet, die an ihrem freien Ende zur Seite des Stifts hin abgewinkelt ist. In einer Montageposition, in der das Wischblatt quer zur Längsrichtung des Wischarms gehalten wird, kann der Stift in die Lagerbohrung des Verbindungsteils geschoben werden. Wird das Wischblatt anschließend parallel zur Längsrichtung des Wischarms gedreht, übergreift die Brücke das Wischblatt und verriegelt es mit ihrem abgewinkelten Ende, so dass seitliche Führungsflächen des blockförmigen Abschnitts des ersten Teils des Verbindungsstücks im montierten Zustand zwischen dem abgewinkelten Ende der Brücke und einer gegenüberliegenden Fläche des zweiten Teils geführt werden. Die Brücke taucht in der Betriebsstellung des Wischblatts in eine entsprechende Nut des ersten Teils ein und schließt etwa bündig mit dessen Oberseite ab. Zur Demontage muss das Wischblatt in die entgegengesetzte Richtung geschwenkt werden, bis das abgewinkelte Ende außer Eingriff gebracht ist und das Wischblatt vom Stift gezogen werden kann. Durch das relativ weite Auslenken des Wischblatts in eine bestimmte Position gestaltet sich die Montage bzw. Demontage des Wischblatts ungünstig.

Ferner ist aus der US-A-3 716 888 ein Gelenkarm mit einer Gelenkstange bekannt, die aus einem Stahlband mit einem rechteckigen Querschnitt hergestellt ist. Dabei verläuft die breite Seite des Rechtecks annähernd über die gesamte Länge der Wischstange etwa parallel zur Fahrzeugscheibe, während das freie Ende der Wischstange um etwa 90° um die Längsachse gedreht ist, sodass die breite Seite des Rechtecks im Endbereich etwa senkrecht zur Fahrzeugscheibe verläuft. Dieser Teil der Wischstange trägt einen darauf rechtwinklig stehenden Lagerzapfen, um damit ein Wischblatt nach Art eines Sidelocks gelenkig zu verbinden. Die senkrecht zur Fahrzeugscheibe verlaufende Fläche der Wischstange dient als Anlauffläche für das Wischblatt. Die Wischstange verläuft an ihrem anderen Ende in Längsrichtung durch ein Gelenkteil und ist mit dessen Dachwand am antriebsseitigen Ende durch einen Niet fest verbunden. Das zum freien Ende der Wischstange weisende Ende des Gelenkteils umfasst die Wischstange allseitig. Der Wischarm besitzt keine Zugfeder, sondern einen aufwändigen Federmechanismus zum Anpressen des Wischblatts an die Windschutzscheibe.

Aus der US-A-3 178 751 ist ein Wischarm bekannt, der auf dem größten Teil seiner Länge rohrförmig ausgebildet ist und an seinem freien Ende abgeflacht oder anderweitig verformt ist, um ein flaches Endstück zu halten. Dieses wird mit einem Gelenkelement fest, aber lösbar verbunden. In dem rohrförmigen Teil des Wischarms ist eine Torsionsfeder untergebracht, durch die das Wischblatt gegen die Windschutzscheibe eines Fahrzeugs gedrückt wird. Dadurch entfällt eine Zugfeder.

Das Dokument EP-A-0 566 471 weist die Merkmale des Oberbegriffes des Anspruchs 1 als auch die Merkmale des Oberbegriffes des Anspruchs 3 auf.

### Vorteile der Erfindung

Nach der Erfindung besitzt das freie Ende der Wischstange seitlich zu einem Wischblatt hin einen etwa parallel zu einer Fahrzeugscheibe verlaufenden Lagerzapfen. Auf diesen Lagerzapfen wird das Wischblatt seitlich vom Wischarm schwenkbar nach dem "Sidelock-Prinzip" montiert und axial gesichert. Dadurch ergibt sich für den Scheibenwischer, bestehend aus dem Wischarm und dem Wischblatt eine flache Bauweise, wobei die runde Wischstange in Kombination mit dem Sidelock-Prinzip sehr gute Anströmungsverhältnisse für den Fahrtwind ergibt, die sich auch bei unterschiedlichen Winkellagen des Wischarms zur Fahrtrichtung nur geringfügig ändern.

Bevorzugt wird der erfindungsgemäße Wischarm in Verbindung mit einem gelenkfreien Wischblatt eingesetzt, sodass nur geringe Windangriffsflächen entstehen, und die Sicht des Fahrers minimal beeinträchtigt wird. Da das Befestigungsteil und Gelenkteil des Wischarms sowie die Einhängevorrichtung in Gestalt einer Öse am Ende der Wischstange auf der Seite des Gelenkteils gegenüber üblichen Scheibenwischern nicht verändert sind, kann auf bewährte Bauteile zurückgegriffen werden, die günstig hergestellt werden können.

Die Wischstange besitzt vorzugsweise ein kreisrundes Querschnittprofil. Möglich sind aber auch ovale Querschnitte, wobei das Durchmesserverhältnis des kleinsten Durchmessers zum größten Durchmesser den Wert von 0,5 nicht unterschreiten sollte.

Die Wischstange kann aus Metall oder Kunststoff bestehen und weist ein Rohrprofil auf.

Das Endteil mit dem integrierten Gelenkzapfen ist erfindungsgemäß als separates Endstück ausgestaltet, das in die aus einem Rohr gebildete Wischstange eingesetzt und durch Formschluss, Kraftschluss und/oder Stoffschluss befestigt ist. Das Endstück besitzt einen axialen Anschlag, der zweckmäßigerweise bündig an das rohrförmige Mittelteil der Wischstange anschließt, sodass ein optisch günstiges Design entsteht. Ein in die Wischstange hineinragender Zapfen besitzt in der Regel einen kreisförmigen Querschnitt. Um Momente um die Längsachse der Wischstange besser übertragen zu können, ist es zweckmäßig, eine Formschlussverbindung vorzusehen, die einen von der Kreisform abweichenden Querschnitt aufweist, z.B. ein Polygon, eine Verzahnung, Rändelung oder dgl.

Das Endteil kann im Bereich des Lagerzapfens quer zu diesem abgeplattet sein, wobei die abgeplatteten Flächen über den Lagerzapfen hinaus an einem Verlängerungsstück fortgeführt sein können. Das Verlängerungsstück greift bei der Montage eines wischblatts in entsprechende Hinterschneidungen oder Taschen des Wischblatts oder der daran befestigten Elemente und dient zur axialen Fixierung des Wischblatts auf dem Lagerzapfen im montierten Zustand.

Nach einer weiteren Ausgestaltung der Erfindung ist die Wischstange aus einem Rohr hergestellt, das an dem freien Ende quer zum Lagerzapfen flach zusammengedrückt ist, und der Lagerzapfen mit dem flachen Ende durch Pressen, Schweißen, Löten und/oder Nieten fest verbunden ist. Dabei kann der Lagerzapfen ggf. axial durch zusätzliche Sicherungselemente in Form von Absätzen, Bünden oder Sicherungsringen fixiert bzw. gesichert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:

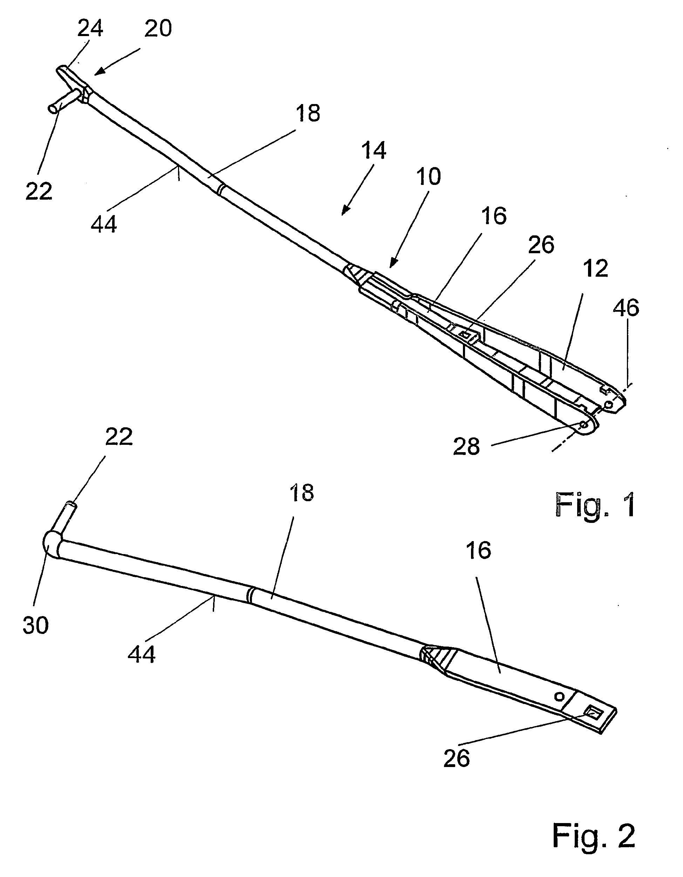

- Fig. 1: eine perspektivische Ansicht eines Gelenkarms von unten,
- Fig. 2: eine perspektivische Ansicht einer Wischstange als Variante zu einer Wischstange des Wischarms nach Fig. 1,
- Fig. 3: eine Variante zur Fig. 1 in einem Teilschnitt,
- Fig.: 4 eine Variante einer Wischstange nach Fig. 1 in ei- nem Teillängsschnitt,
- Fig. 5: und 6 Umströmungen eines rechteckigen und runden Querschnittprofils.

### Beschreibung der Ausführungsbeispiele

Ein Gelenkarm 10 besitzt ein Gelenkteil 12, das um eine Gelenkachse 46 eines nicht näher dargestellten Abklappgelenks schwenkbar mit einem nicht dargestellten Befestigungsteil verbunden ist. Zu diesem Zweck wird ein Gelenkstift in Lageraugen 28 des Gelenkteils 12 eingesetzt. Das Gelenkteil 12 besitzt ein u-förmiges Querschnittprofil, das zu einer nicht dargestellten Fahrzeugscheibe hin offen ist. Das Gelenkteil 12 umfasst mit einem Ende ein abgeplattetes Ende 16 einer Wischstange 14 und ist mit dieser verkrimpt. Das abgeplattete Ende 16 reicht ein Stück weit in das u-förmige Profil des Gelenkteils 12 und besitzt eine Einhängeöse 26 für eine nicht dargestellte Zugfeder.

Zwischen dem abgeplatteten Ende 16 und einem Endteil 20 weist die Wischstange 14 ein Mittelteil 18 auf, das ein rundes, kreisförmiges oder ovales Querschnittprofil besitzt. Das Endteil 20 kann über den Lagerzapfen 22 hinaus eine Verlängerung 24 aufweisen, die bei der Montage eines Wischblatts in eine Hinterschneidung bzw. eine Tasche des Wischblatts oder eines daran befestigten Bauteils eingreift und so das Wischblatt axial auf dem Lagerzapfen 22 fixiert.

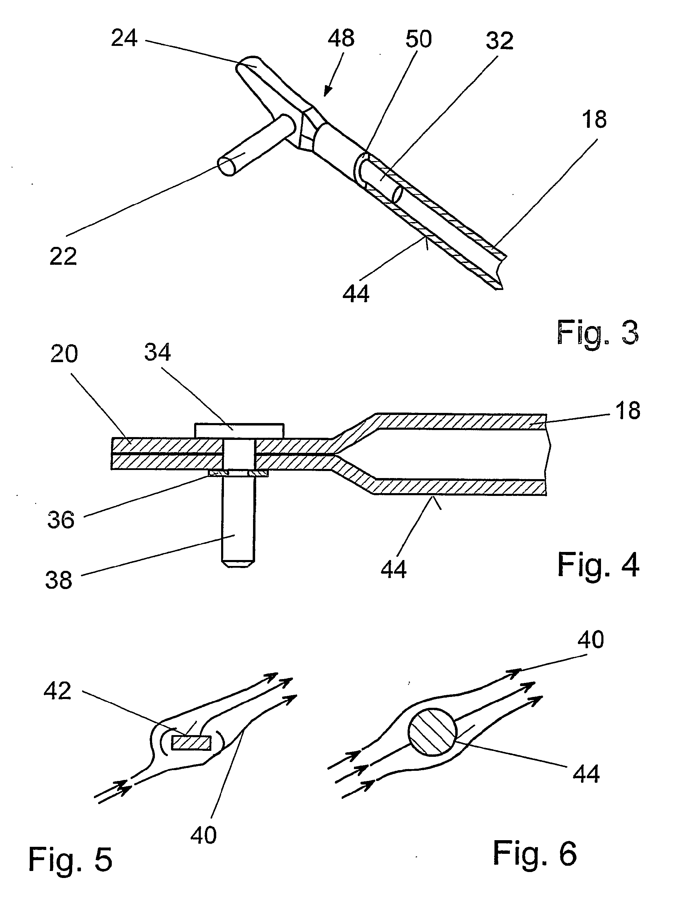

Das Endteil 20 mit dem Lagerzapfen 22 ist in der Ausführung nach Fig. 3 als separates Endstück 48 ausgebildet, das bis zu einem Anschlag 50 mit einem Zapfen 32 in das rohrförmige Mittelteil 18 eingepresst oder in einer anderen geeigneten Weise befestigt ist. Dabei kann es zweckmäßig sein, dass der Zapfen 32 und das entsprechende Innenprofil des Mittelteils 18 einen von der Kreisform abweichenden Querschnitt aufweisen, z.B. ein Polygon oder dgl. Der Anschlag 50 ist als Absatz ausgebildet, sodass seine äußere Umfangskontur bündig mit der äußeren Umfangskontur des Mittelteils 18 abschließt. Dadurch wird ein optisch harmonischer Eindruck erzielt, da nur eine kaum wahrnehmbare Fügungslinie sichtbar ist.

Bei der Ausführung nach Fig. 4 ist das rohrfömige Mittelteil 18 im Bereich des Endteils 20 quer zu einem Lagerzapfen 38 zusammengedrückt. Der Lagerzapfen 38 ist in eine Öffnung des Endteils 20 eingepresst und ist axial einerseits durch einen Kopf 34 und andererseits durch einen Sicherungsring 36 axial gesichert. Der Sicherungsring 36 kann auch durch einen Bund oder Absatz des Lagerzapfens 38 ersetzt werden, wobei der Kopf 34 als Nietkopf ausgebildet oder durch einen Sicherungsring ersetzt werden kann.

Die Fig. 5 und 6 zeigen Luftströmungen 40 des Fahrtwinds und zwar in Fig. 5 im Zusammenhang mit einer rechteckigen Querschnittkontur 42 und in Fig. 6 mit einer runden Querschnittkontur 44. Die Figuren zeigen deutlich, dass sich bei einer rechteckigen Querschnittkontur 42 die Strömungsverhältnisse mit der Anströmrichtung deutlich verändern, während bei einer runden Querschnittkontur 44 die Strömungsverhältnisse unabhängig von der Anströmrichtung sind.

## Patentansprüche

1. Gelenkarm (10) mit einer Wischstange (14), die aus einem Rohr hergestellt ist und deren eines abgeplattetes Ende (16) in einem Gelenkteil (12) durch Verkrimpen befestigt ist, während mit ihrem freien Ende (20) ein Wischblatt gelenkig verbunden werden kann, und in dem abgeplatteten Ende (16) der Wischstange (14) eine Einhängeöse (26) vorgesehen ist, **dadurch gekennzeichnet, dass** in das freie Ende (20) der Wischstange (14) ein Endstück (48) mit einem Zapfen (32) eingesetzt und durch Formschluss, Kraftschluss und/oder Stoffschluss befestigt ist, wobei ein Lagerzapfen (22) in dem Endstück (48) integriert ist, und dass das freie Ende (20) der Wischstange (14) seitlich zu einem Wischblatt etwa parallel zu einer Fahrzeugscheibe verläufen kann.

2. Gelenkarm (10) nach Anspruch 1, **dadurch gekennzeichnet, dass** der Zapfen (32) ein von der Kreisform abweichendes Querschnittprofil hat und das Rohr der Wischstange (14) in dem Bereich des Zapfens (32) ein entsprechendes Innenprofil aufweist.

3. Gelenkarm (10) nach dem Oberbegriff von Anspruch 1, **dadurch gekennzeichnet, dass** das Rohr der Wischstange (14) am freien Ende (20) quer zu einem Lagerzapfen (38) flach zusammengedrückt ist, und der Lagerzapfen (38) mit dem flachen Ende (20) durch Pressen, Schweißen oder Nieten fest verbunden ist (Fig. 4).

4. Gelenkarm (10) nach einem der Ansprüche 1 oder 3, **dadurch gekennzeichnet, dass** die Wischstange (14) über den Lagerzapfen (22, 38) hinaus ein Verlängerungsstück (24) besitzt.

## Claims

1. Articulated arm (10) with a wiper rod (14) which is produced from a tube and the one flattened end (16) of which is fastened in an articulated part (12) by crimping while a wiper blade can be connected in an articulated manner to the free end (20) of said wiper rod, and a suspension eye (26) is provided in the flattened end (16) of the wiper rod (14), **characterized in that** an end piece (48) having a pin (32) is inserted into the free end (20) of the wiper rod (14) and is fastened by an interlocking connection, frictional connection and/or cohesive material joint, a bearing journal (22) being integrated in the end piece (48), and **in that** the free end (20) of the wiper rod (14) can run laterally with respect to a wiper blade and approximately parallel to a vehicle window.

2. Articulated arm (10) according to Claim 1, **characterized in that** the pin (32) has a cross-sectional profile deviating from the circular shape, and the tube of the wiper rod (14) has a corresponding internal profile in the region of the pin (32).

3. Articulated arm (10) according to the precharacterizing clause of Claim 1, **characterized in that** the tube of the wiper rod (14) is compressed such that it is flat at the free end (20) transversely with respect to a bearing journal (38), and the bearing journal (38) is fixedly connected to the flat end (20) by pressing, welding or riveting (Fig. 4).

4. Articulated arm (10) according to either of Claims 1 and 3, **characterized in that** the wiper rod (14) has an extension piece (24) beyond the bearing journal (22, 38).

## Revendications

1. Bras articulé (10) muni d'une tige d'essuie-glace (14) qui est constituée d'un tube et dont une extrémité aplatie (16) est fixée dans une partie articulée (12) par sertissage, tandis qu'un balai d'essuie-glace peut être connecté de manière articulée avec son extrémité libre (20) et un oeillet d'accrochage (26) est prévu dans l'extrémité aplatie (16) de la tige d'essuie-glace (14), **caractérisé en ce que** dans l'extrémité libre (20) de la tige d'essuie-glace (14) est inséré un embout (48) avec un tourillon (32), qui est fixé par engagement par coopération de forme, par force et/ou par liaison de matière, un tourillon de palier (22) étant intégré dans l'embout (48), et **en ce que** l'extrémité libre (20) de la tige d'essuie-glace (14) peut s'étendre latéralement par rapport à un balai d'essuie-glace approximativement parallèlement à une vitre de véhicule.

2. Bras articulé (10) selon la revendication 1, **caractérisé en ce que** le tourillon (32) présente un profil en section transversale s'écartant de la forme circulaire, et le tube de la tige d'essuie-glace (14) présente un profil interne correspondant dans la région du tourillon (32).

3. Bras articulé (10) selon le préambule de la revendication 1, **caractérisé en ce que** le tube de la tige d'essuie-glace (14) est comprimé à plat à l'extrémité libre (20) transversalement à un tourillon de palier (38), et le tourillon de palier (38) est connecté fixement à l'extrémité plate (20) par pressage, soudage ou rivetage (figure 4).

4. Bras articulé (10) selon l'une quelconque des revendications 1 ou 3, **caractérisé en ce que** la tige d'essuie-glace (14) possède une pièce de prolongement (24) au-delà du tourillon de palier (22, 38).
